# FASCICULE DE BREVET EUROPEEN

(11) **EP 3 031 053 B1**
(45) Date de publication et mention de la délivrance du brevet: **19.12.2018**
(21) Numéro de dépôt: 14753042.2
(22) Date de dépôt: 06.08.2014
(51) Int. Cl.: G21F 9/10, G21F 9/16, C04B 28/00, G21F 9/04, C04B 111/00

(54) **PROCÉDÉ POUR TRAITER ET/OU INERTER UNE SOLUTION FORTEMENT SALINE ÉVENTUELLEMENT CONTAMINÉE**
VERFAHREN ZUM BEHANDELN UND/ODER INERTISIEREN EINER STARK SALZHALTIGEN KONTAMINIERTEN LÖSUNG
PROCESS FOR TREATING AND/OR INERTIZING A STRONG SALINE CONTAMINATED SOLUTION

(30) Priorité: 08.08.2013 FR 1357885; 19.12.2013 FR 1363036
(43) Date de publication de la demande: 15.06.2016
(73) Titulaire: Commissariat à l'Énergie Atomique et aux Énergies Alternatives, 75015 Paris (FR)
(72) Inventeur: GERENTON, Adrien, 84000 Avignon (FR); LAMBERTIN, David, 84860 Caderousse (FR); FRIZON, Fabien, 30400 Villeneuve-lès-Avignon (FR)
(74) Mandataire: Brevalex
(86) Numéro de dépôt international: PCT/EP2014/066937
(87) Numéro de publication internationale: WO 2015/018874

(56) Documents cités:
- EP-A1- 1 780 730
- WO-A1-92/18437
- FR-A1- 2 881 740

## Description

### DOMAINE TECHNIQUE

La présente invention appartient au domaine technique de l'élimination et du conditionnement des déchets et notamment des liquides présentant une forte salinité et éventuellement contaminés.

La présente invention concerne un procédé permettant de préparer un géopolymère obtenu à partir d'une solution d'activation comprenant un tel liquide présentant une forte salinité et éventuellement contaminé et permettant, de fait, d'inerter et/ou de traiter un tel liquide.

Le procédé selon la présente invention permet ainsi d'obtenir un géopolymère dans la matrice minérale duquel sont inclus les éléments initialement contenus dans le liquide présentant une forte salinité et éventuellement contaminé à inerter et/ou à traiter.

### ÉTAT DE LA TECHNIQUE ANTÉRIEURE

Usuellement, dans le cadre du conditionnement des déchets de faible et moyenne activité, les déchets homogènes tels que des concentrats d'évaporation ou des boues de co-précipitation, sont cimentés par des liants du type Portland ou des liants composés, i.e. des liants silico-calciques. Ce type de matrice cimentaire présente de nombreux avantages que sont notamment une bonne disponibilité des matières premières et un faible coût.

Toutefois, par exemple dans le cas du conditionnement de concentrats, la nature et la concentration des ions en solution interviennent notamment sur la cinétique d'hydratation des phases silico-calciques en agissant sur la germination et la croissance des hydrates mais aussi sur les caractéristiques rhéologiques et la cohésion de la pâte de ciment du fait de la modification des forces interparticulaires. Selon le degré de perturbation engendré, la compatibilité entre le déchet et la matrice cimentaire peut être faible : le développement de formulations spécifiques ou d'un prétraitement des déchets peut se révéler nécessaire afin de limiter les interactions entre la matrice et les constituants du déchet.

Depuis une trentaine d'années, l'on sait que la mise en contact de matériaux alumino-silicatés et d'une solution de fort pH appelée solution d'activation peut conduire, sous des conditions expérimentales choisies, à l'obtention de zéolites de synthèse **[1]**. La nature cristalline et le degré de cristallinité de ces dernières dépendent notamment de la nature des matériaux initiaux utilisés et du rapport massique solide/solution mis en oeuvre.

Les sources alumino-silicatées pouvant être utilisées pour cette synthèse sont très variées. Il peut s'agir de minéraux naturels tels qu'illite, stilbite, kaolinite **[2,3]**, de minéraux calcinés comme le métakaolin **[4-6]**, ou de matériaux de substitution, principalement des sous-produits calcinés ou résidus d'exploitation industrielle comme des cendres volantes **[7-12].** Lorsque le matériau réactif initial contient essentiellement de la silice et de l'aluminium, qu'il est activé par des solutions fortement alcalines à une température inférieure à 100°C, et que le rapport massique solide/solution est faible, typiquement inférieur à 0,5, le matériau obtenu est un polymère inorganique alumino-silicaté amorphe **[13, 14]** dénommé « géopolymères » **[15].**

Un matériau ayant entièrement réagi est donc défini par les rapports molaires H₂O/M₂O, SiO₂/Al₂O₃, SiO₂/M₂O, et possède un rapport molaire M₂O/Al₂O₃ = 1 **[16, 17]**, dans lesquels M représente un métal alcalin. Afin de formuler les matériaux les plus performants, certains auteurs ont préconisé une gamme de formulation globale pour les géopolymères au sodium i.e. dans lesquels M représente Na **[18]** :
0,2 < Na₂O/SiO₂ < 0,28
3,5 < SiO₂/Al₂O₃ < 4,5 et
10 < H₂O/Na₂O < 17,5

Il est à noter que, dans ces études, le rapport M₂O/Al₂O₃ est toujours maintenu égal à 1.

Les géopolymères sont essentiellement utilisés comme liants **[19-23]** dans la formulation de matériaux de construction **[24, 25]**, de bétons ou de mortiers **[26, 27]** et de matériaux résistants au feu **[28-30].** Plusieurs modes de production sont connus **[31, 32]**, permettant leur mise en oeuvre sur chantier ou dans le cadre de préfabrications **[33, 34].**

D'autre part, tout comme les ciments Portland silico-calciques usuels, les géopolymères peuvent être employés comme matrice d'enrobage ou d'inertage des déchets **[35-37].** Plusieurs auteurs ont ainsi étudié par exemple l'immobilisation, de métaux lourds **[38-41]** ou autres éléments toxiques comme l'arsenic **[42].**

La majorité des études liées à l'introduction de déchets dans des matrices géopolymères se concentrent sur l'inertage de solides tels que des laitiers, des cendres volantes ou des résidus d'incinération, ou sur l'inertage de solutions faiblement concentrées en ions.

A titre d'exemple illustratif, le brevet US 4,859,367 **[37]** décrit l'inertage d'une solution liquide contaminée contenant des ions chlorure à une concentration d'environ 120 mM (exemple 2). A cette solution, sont ajoutés de la fumée de silice et de l'hydroxyde de potassium pour préparer une solution d'activation.

En variante, la demande internationale WO 2006/097696 **[35]** envisage d'inerter une solution aqueuse contaminée en concentrant cette dernière sur une colonne échangeuse d'ions qui est en un matériau alumino-silicaté et notamment en clinoptilolite. Une fois la concentration effectuée, la colonne échangeuse d'ions sert de source alumino-silicatée pour synthétiser un géopolymère dans lequel sont inertés les contaminants. La concentration en sels dans la solution aqueuse contaminée n'est ni décrite, ni évoquée dans la demande internationale WO 2006/097696.

FR 2 881 740 propose un procédé pour inerter une solution aqueuse d'hydroxyde de sodium concentrée éventuellement contaminée radioactivement mettant en oeuvre un ciment. et un retardeur.

WO92/18437 propose un moyen pour conditionner des déchets dangereux. La composition de conditionnement contient de l'oxyde de magnésium, du chlorure de magnésium et un filler.

De plus, la demande de brevet EP 0 614 858 envisage des solutions d'activation comprenant, en de très faibles quantités, des matériaux du type acide de Lewis tels que chlorure de magnésium et chlorure de calcium **[25].**

En ce qui concerne la présence d'ions lors de la synthèse de géopolymères, Lee et Deventer ont étudié les effets de sels inorganiques sur cette synthèse **[8].** Lors de ces travaux, les différents sels de type chlorure ou carbonate sont utilisés à 4 M soit sous forme solubilisée dans une solution aqueuse, soit sous forme d'une suspension de sels insolubles dans une solution aqueuse. Cette solution ou suspension est ajoutée à la pâte obtenue suite au mélange de la source alumino-silicatée avec la solution d'activation. A noter que Lee et Deventer concluent leurs travaux en conseillant d'éviter une contamination par des sels chlorures lors de la synthèse de géopolymères dissuadant, de fait, l'homme du métier de mettre en oeuvre des solutions fortement concentrées en ions et notamment en ions chlorures.

Au vu de l'intérêt quant à l'obtention de procédés permettant l'inertage ou le traitement de solutions fortement salines éventuellement contaminées, les inventeurs se sont fixé pour but de proposer un procédé simple, pratique et applicable au niveau industriel et qui ne présente pas les inconvénients des procédés listés ci-dessus.

### EXPOSÉ DE L'INVENTION

La présente invention permet de résoudre les inconvénients des procédés de conditionnement de solutions fortement salines de l'état de la technique et d'atteindre le but que se sont fixé les inventeurs à savoir proposer un procédé dans lequel les solutions fortement salines sont inertées, conditionnées et/ou immobilisées dans une matrice géopolymère.

Cette approche se distingue des approches d'immobilisation de déchets de la littérature, dans lesquels les déchets conditionnés sont des solides. En effet, l'utilisation de géopolymères propose une gamme d'acceptation des déchets complémentaire à celle des matrices cimentaires silico-calciques et se révèlent une alternative intéressante aux matériaux usuels lorsque ces derniers sont chimiquement peu compatibles avec les déchets à conditionner.

En outre, la présente invention surmonte le préjugé technique selon lequel les ions chlorures et *a fortiori* les ions chlorures fortement concentrés sont déconseillés lors de la synthèse de géopolymères **[8].**

La présente invention consiste en la réalisation d'une solution d'activation à partir de déchets homogènes à conditionner tels que des solutions fortement salines ou des concentrats. L'obtention d'une solution d'activation à partir de ces déchets rend directement les déchets compatibles avec une matrice géopolymère.

La mise en oeuvre d'une solution fortement saline éventuellement contaminée peut entraîner une modification des rapports de composition préconisés par la littérature, en particulier le rapport M₂O/Al₂O₃ qui peut alors devenir significativement différent de 1 et ce, tout en maintenant les caractéristiques essentielles nécessaires à une matrice d'immobilisation. Ainsi, le rapport M₂O/Al₂O₃ peut être supérieur à 1,1; notamment compris entre 1,1 et 2 ; en particulier compris entre 1,2 et 1,8 et typiquement de l'ordre de 1,5 (i.e. 1,5 ± 0,1). En variante, le rapport M₂O/Al₂O₃ peut être inférieur à 0,9; notamment compris entre 0,2 et 0,8; en particulier compris entre 0,3 et 0,7 et typiquement de l'ordre de 0,5 (i.e. 0,5 ± 0,1).

Plus particulièrement, la présente invention concerne un procédé pour traiter et/ou inerter une solution, éventuellement contaminée, présentant une concentration en ions halogénures ou en ions phosphates supérieure ou égale à 250 mM, ledit procédé comprenant une étape de dissolution/polycondensation d'une source alumino-silicatée dans une solution d'activation préparée à partir de ladite solution, éventuellement contaminée, présentant une concentration en ions halogénures ou en ions phosphates supérieure ou égale à 250 mM. La mise en oeuvre de ce procédé permet d'obtenir un géopolymère dans la matrice minérale duquel sont inclus les éléments initialement contenus dans ladite solution, éventuellement contaminée, présentant une concentration en ions halogénures ou en ions phosphates supérieure ou égale à 250 mM.

Par « traiter et/ou inerter une solution », on entend, dans le cadre de la présente invention, une solidification et une stabilisation de ladite solution en un matériau solide présentant une perméabilité à l'eau et une fraction lixiviable réduites.

Par « solution présentant une concentration en ions halogénures ou en ions phosphates supérieure ou égale à 250 mM » également désignée dans la présente par « solution fortement saline », on entend une solution liquide comprenant des ions halogénures et/ou des ions phosphates en une concentration supérieure ou égale à 250 mM, notamment supérieure ou égale à 500 mM, en particulier supérieure ou égale à 1 M et, plus particulièrement, en une concentration comprise entre 2 et 15 M ou encore entre 5 et 10 M.

Avantageusement, la solution fortement saline comprend au moins des ions choisis entre les ions fluorure (F⁻), les ions bromure (Br⁻), les ions chlorure (Cl⁻), les ions iodure (I⁻) et les ions phosphate (PO₄³⁻) en une concentration telle que précédemment définie. Dans certaines formes de mise en oeuvre, la solution fortement saline peut comprendre plusieurs ions choisis entre les ions fluorure (F⁻), les ions bromure (Br⁻), les ions chlorure (Cl⁻), les ions iodure (I⁻) et les ions phosphate (PO₄³⁻) en une concentration telle que précédemment définie.

Par « solution contaminée », on entend une solution fortement saline telle que précédemment définie comprenant au moins un élément choisi parmi les métaux lourds, les éléments traces ou les radioéléments. Avantageusement, le (ou les) élément(s) contaminant(s) que comprend la solution contaminée est(sont) choisi(s) parmi le tritium (³H), le carbone (¹⁴C), le chlore (³⁶Cl), le fluor (¹⁸F), l'iode (¹³¹I), le potassium (⁴⁰K), le calcium (⁴⁵Ca), le cobalt (⁶⁰Co), le nickel (⁶³Ni), le soufre, le zinc, le phosphore, le mercure, le plomb, le cadmium, le krypton (⁸⁵Kr), l'arsenic, le strontium (⁹⁰Sr), le ruthénium, le césium, des émetteurs α, tels que l'américium, le plutonium et l'uranium et leurs mélanges.

Avantageusement, la solution à traiter et/ou à inerter dans le cadre de la présente invention présente une concentration en ions halogénures ou en ions phosphates supérieure ou égale à 250 mM naturellement. En variante, elle peut présenter une telle concentration suite à l'ajout d'un (ou plusieurs) ion(s) tel(s) que précédemment défini(s) ou suite à un traitement de type évaporation ou concentration.

Avantageusement encore, la solution fortement saline se présente sous forme d'une solution aqueuse, d'une suspension dans de l'eau ou d'une suspension colloïdale dans de l'eau.

La quantité de matière organique présente dans la solution fortement saline mise en oeuvre dans le cadre de la présente invention est relativement faible. En effet, cette quantité peut être estimée par la mesure de la quantité de matières organiques biodégradables via la demande biochimique en oxygène et notamment la demande biochimique en oxygène mesurée à 5 j, à 20°C et dans le noir (DBO5). Typiquement, la DBO5 moyenne de la solution fortement saline mise en oeuvre dans le cadre de la présente invention est inférieure ou égale à 400 mg/l et notamment est inférieure ou égale à 300 mg/l.

En particulier, la solution fortement saline mise en oeuvre dans le cadre de la présente invention est choisie dans le groupe constitué par de l'eau saumâtre, de l'eau de source, de l'eau potable, de l'eau de mer, un effluent industriel, une solution issue de l'agroalimentaire, une solution issue d'une installation nucléaire et une solution issue de l'industrie chimique fine ou de l'industrie pharmaceutique.

Par « géopolymère » ou « matrice géopolymère », on entend dans le cadre de la présente invention un matériau solide et poreux à l'état sec, obtenu suite au durcissement d'un mélange plastique contenant des matériaux finement broyés (i.e. la source alumino-silicatée) et une solution saline (i.e. la solution d'activation), ledit mélange plastique étant capable de faire prise et de durcir au cours du temps. Ce mélange peut également être désigné sous les termes « mélange géopolymérique » ou « composition géopolymérique ». Le durcissement du géopolymère est le résultat de la dissolution/polycondensation des matériaux finement broyés du mélange géopolymérique dans une solution saline telle qu'une solution saline de fort pH (la solution d'activation).

Plus particulièrement, un géopolymère ou matrice géopolymère est un polymère inorganique alumino-silicaté amorphe. Ledit polymère est obtenu à partir d'un matériau réactif contenant essentiellement de la silice et de l'aluminium (i.e. la source alumino-silicatée), activé par une solution fortement alcaline, le rapport massique solide/solution dans la formulation étant faible. La structure d'un géopolymère est composée d'un réseau Si-O-AI formé de tétraèdres de silicates (SiO₄) et d'aluminates (AlO₄) liés en leurs sommets par partage d'atomes d'oxygène. Au sein de ce réseau, se trouve(nt) un (ou plusieurs) cation(s) compensateur(s) de charge également appelé(s) cation(s) de compensation qui permettent de compenser la charge négative du complexe AlO₄⁻. Ledit (ou lesdits) cation(s) de compensation est(sont) avantageusement choisi(s) dans le groupe constitué par les métaux alcalins tels que le lithium (Li), le sodium (Na), le potassium (K), le rubidium (Rb) et le césium (Cs), les métaux alcalino-terreux tels que le magnésium (Mg), le calcium (Ca), le strontium (Sr) et le barium (Ba) et leurs mélanges. Dans la matrice géopolymère obtenue par mise en oeuvre du procédé selon l'invention, les ions apportés par la solution fortement saline se trouvent dans le réseau de tétraètes de silicates et d'aluminates ainsi que parmi les cations de compensation.

Les expressions « matériau réactif contenant essentiellement de la silice et de l'aluminium » et « source alumino-silicatée » sont, dans la présente invention, similaires et utilisables de façon interchangeable.

Le matériau réactif contenant essentiellement de la silice et de l'aluminium utilisable pour préparer la matrice géopolymére mise en oeuvre dans le cadre de l'invention est avantageusement une source solide contenant des alumino-silicates amorphes. Ces alumino-silicates amorphes sont notamment choisis parmi les minéraux d'alumino-silicates naturels tels que illite, stilbite, kaolinite, pyrophyllite, andalousite, bentonite, kyanite, milanite, grovénite, amésite, cordiérite, feldspath, allophane, etc... ; des minéraux d'alumino-silicates naturels calcinés tels que le métakaolin ; des verres synthétiques à base d'alumino-silicates purs; du ciment alumineux; de la ponce; des sous-produits calcinés ou résidus d'exploitation industrielle tels que des cendres volantes et des laitiers de haut fourneau respectivement obtenus à partir de la combustion du charbon et lors de la transformation du minerai de fer en fonte dans un haut fourneau ; et des mélanges de ceux-ci. Avantageusement, dans le cadre de la présente invention, la source alumino-silicatée mise en oeuvre est du métakaolin car cette source alumino-silicatée permet d'obtenir des géopolymères plus « purs » et dont les propriétés sont globalement plus homogènes.

La solution saline de fort pH également connue, dans le domaine de la géopolymérisation, comme « solution d'activation » est une solution aqueuse fortement alcaline pouvant éventuellement contenir des composants silicatés notamment choisis dans le groupe constitué par la silice, la silice colloïdale et la silice vitreuse.

Les expressions « solution d'activation », « solution saline de fort pH » et « solution fortement alcaline » sont, dans la présente invention, similiaires et utilisables de façon interchangeable.

Par « fortement alcaline » ou « de fort pH », on entend une solution dont le pH est supérieur à 9, notamment supérieur à 10, en particulier, supérieur à 11 et, plus particulièrement supérieur à 12. En d'autres termes, la solution d'activation présente une concentration en OH⁻ supérieure ou égale à 0,01 M, notamment supérieure ou égale à 0,1 M, en particulier supérieure ou égale à 1 M et, plus particulièrement, comprise entre 5 et 20 M.

La solution d'activation comprend le cation de compensation ou le mélange de cations de compensation sous forme d'une solution ionique ou d'un sel. Ainsi, la solution d'activation est notamment choisie parmi une solution aqueuse de silicate de sodium (Na₂SiO₃), de silicate de potassium (K₂SiO₂), d'hydroxyde de sodium (NaOH), d'hydroxyde de potassium (KOH), d'hydroxyde de calcium (Ca(OH)₂), d'hydroxyde de cesium (CsOH) et leurs dérivés.

Les composants silicatés présents dans la solution d'activation peuvent être non seulement les silicates apportés par les silicates des cations de compensation présents dans la solution d'activation mais aussi d'autres silicates ajoutés à la solution d'activation et notamment choisis parmi la silice, la silice colloïdale et la silice vitreuse. Il est donc clair que les composants silicatés présents dans la solution d'activation sont soit uniquement le ou les silicate(s) apporté(s) sous forme de silicates des cations de compensation, soit uniquement le ou les silicate(s) ajouté(s) et choisi(s) parmi la silice, la silice colloïdale et la silice vitreuse, soit un mélange de ces deux sources de silicates.

Avantageusement, le procédé selon la présente invention comprend les étapes suivantes :
a) préparer une solution d'activation qui est une solution aqueuse dont le pH est supérieur à 9 à partir de la solution, éventuellement contaminée, présentant une concentration en ions halogénures ou en ions phosphates supérieure ou égale à 250 mM,
b) ajouter à la solution obtenue à l'étape (a) au moins une source alumino-silicatée,
c) soumettre le mélange obtenu à l'étape (b) à des conditions permettant le durcissement du géopolymère.

L'étape (a) du procédé selon la présente invention consiste à ajouter à la solution, éventuellement contaminée, présentant une concentration en ions halogénures ou en ions phosphates supérieure ou égale à 250 mM, un (ou plusieurs) élément(s) permettant d'obtenir une solution d'activation i.e. une solution fortement alcaline.

Avantageusement, l'étape (a) du procédé selon la présente invention consiste à ajouter à la solution fortement saline au moins un élément choisi parmi du silicate de sodium (Na₂SiO₃), du silicate de potassium (K₂SiO₂), de l'hydroxyde de sodium (NaOH), de l'hydroxyde de potassium (KOH), de l'hydroxyde de calcium (Ca(OH)₂), de l'hydroxyde de césium (CsOH), une solution aqueuse de silicate de sodium (Na₂SiO₃), une solution aqueuse de silicate de potassium (K₂SiO₂), une solution aqueuse d'hydroxyde de sodium (NaOH), une solution aqueuse d'hydroxyde de potassium (KOH), une solution aqueuse d'hydroxyde de calcium (Ca(OH)₂), une solution aqueuse d'hydroxyde de césium (CsOH), de la silice, de la silice amorphe, de la silice colloïdale et de la silice vitreuse.

Dans certaines formes de mise ne oeuvre, l'étape (a) du procédé selon la présente invention consiste à ajouter à la solution fortement saline au moins deux éléments choisis parmi du silicate de sodium (Na₂SiO₃), du silicate de potassium (K₂SiO₂), de l'hydroxyde de sodium (NaOH), de l'hydroxyde de potassium (KOH), de l'hydroxyde de calcium (Ca(OH)₂), de l'hydroxyde de césium (CsOH), une solution aqueuse de silicate de sodium (Na₂SiO₃), une solution aqueuse de silicate de potassium (K₂SiO₂), une solution aqueuse d'hydroxyde de sodium (NaOH), une solution aqueuse d'hydroxyde de potassium (KOH), une solution aqueuse d'hydroxyde de calcium (Ca(OH)₂), une solution aqueuse d'hydroxyde de césium (CsOH), de la silice, de la silice amorphe, de la silice colloïdale et de la silice vitreuse. Ces deux éléments sont avantageusement choisis entre de l'hydroxyde de sodium (NaOH), de l'hydroxyde de potassium (KOH), une solution aqueuse d'hydroxyde de sodium (NaOH) et une solution aqueuse d'hydroxyde de potassium (KOH), d'une part, et entre de la silice, de la silice amorphe, de la silice colloïdale et de la silice vitreuse, d'autre part.

Lorsque la solution d'activation contient un (ou plusieurs) composant(s) silicaté(s), ce (ou ces) dernier(s) est(sont) présent(s) en une quantité comprise entre 100 mM et 10 M, notamment entre 500 mM et 8 M et, en particulier, entre 1 et 6 M dans la solution d'activation.

Les éléments précités sont ajoutés en une fois ou en plusieurs fois à la solution fortement saline, avec une étape de mélange entre chaque ajout. Lorsque plusieurs éléments différents sont ajoutés à la solution fortement saline, ils peuvent être ajoutés ensemble ou les uns après les autres, avec une étape de mélange entre chaque ajout. Le (ou les) élément(s) ajouté(s) est(sont) dilué(s) ou dissous dans la solution fortement saline.

Une fois le (ou les) élément(s) ajouté(s) à la solution fortement saline, la solution obtenue est mélangée en utilisant un malaxeur, un agitateur, un barreau magnétique, un bain à ultrasons ou un homogénéisateur. Le mélange/malaxage lors de l'étape (a) du procédé selon l'invention se fait à une vitesse relativement soutenue. Par « vitesse relativement soutenue », on entend, dans le cadre de la présente invention, une vitesse supérieure ou égale à 250 tr/min, éventuellement supérieure ou égale à 350 tr/min.

L'étape (a) du procédé selon l'invention est effectuée à une température comprise entre 10°C et 40°C, avantageusement entre 15°C et 30°C et, plus particulièrement, à température ambiante (i.e. 23°C ± 5°C) pendant une durée supérieure ou égale à 30 min, notamment supérieure ou égale à 1 h et, en particulier supérieure ou égale à 2 h. Dans certaines formes de mise en oeuvre, L'étape (a) du procédé selon l'invention peut présenter une durée supérieure ou égale à 6 h, notamment supérieure ou égale à 10 h, en particulier comprise entre 10 h et 48 h et, plus particulièrement notamment entre 12 h et 36 h.

La solution d'activation obtenue suite à l'étape (a) du procédé selon l'invention se caractérise en ce qu'elle comprend des ions halogénures et/ou des ions phosphates en une concentration supérieure ou égale à 100 mM, typiquement supérieure ou égale à 250 mM, notamment supérieure ou égale à 500 mM, en particulier supérieure ou égale à 1 M et, plus particulièrement, en une concentration comprise entre 2 et 15 M ou encore entre 5 et 10 M.

L'étape (b) du procédé selon l'invention consiste à mettre en contact la solution d'activation obtenue suite à l'étape (a) et la source alumino-silicatée telle que précédemment définie.

La source alumino-silicatée peut être versée en une ou en plusieurs fois sur la solution d'activation obtenue suite à l'étape (a). Dans une forme de mise en oeuvre particulière de l'étape (b), la source alumino-silicatée peut être saupoudrée sur la solution d'activation obtenue suite à l'étape (a).

Avantageusement, l'étape (b) du procédé selon l'invention est mise en oeuvre dans un malaxeur dans lequel la solution d'activation obtenue suite à l'étape (a) a été préalablement introduite. Tout malaxeur connu de l'homme du métier est utilisable dans le cadre de la présente invention. A titre d'exemples non limitatifs, on peut citer un mélangeur NAUTA®, un malaxeur HOBART® et un malaxeur HENSCHEL®.

L'étape (b) du procédé selon l'invention comprend donc un mélange ou malaxage de la solution d'activation obtenue suite à l'étape (a) avec la source alumino-silicatée.

Le mélange/malaxage lors de l'étape (b) du procédé selon l'invention se fait à une vitesse relativement lente. Par « vitesse relativement lente », on entend, dans le cadre de la présente invention, une vitesse de rotation du rotor du malaxeur inférieure à 250 tr/min, notamment supérieure ou égale à 50 tr/min et, en particulier, comprise entre 100 et 240 tr/min. A titre d'exemple non limitatif, dans le cas d'un malaxeur normalisé, la vitesse d'agitation est de 140 tr/min.

En variante, le mélange/malaxage lors de l'étape (b) du procédé selon l'invention se fait à une vitesse relativement lente telle que précédemment définie puis à une vitesse relativement soutenue telle que précédemment définie.

L'étape (b) du procédé selon l'invention est effectuée à une température comprise entre 10°C et 40°C, avantageusement entre 15°C et 30°C et, plus particulièrement, à température ambiante (i.e. 23°C ± 5°C) pendant une durée supérieure ou égale à 2 min, notamment comprise entre 3 min et 1 h et, en particulier comprise entre 5 min et 30 min.

L'homme du métier saura déterminer la quantité de source alumino-silicatée à utiliser dans le cadre de la présente invention en fonction de ses connaissances dans le domaine de la géopolymérisation ainsi que de la nature et de la quantité de solution d'activation mise en oeuvre.

Avantageusement, dans le procédé selon la présente invention, le rapport massique solution activation/MK avec solution d'activation représentant la masse de solution d'activation obtenue suite à l'étape (a) (exprimée en g) et MK représentant la masse de source alumino-silicatée (exprimée en g) utilisé est avantageusement compris entre 0,6 et 2 et notamment entre 1 et 1,5. A titre d'exemple particulier, le rapport solution activation/MK est de l'ordre de 1.

De plus, outre la source alumino-silicatée, du sable, un granulat et/ou des fines peu(ven)t être ajouté(es) à la solution d'activation lors de l'étape (b) du procédé selon l'invention.

Par « granulat », on entend un matériau granulaire, naturel, artificiel ou recyclé dont la dimension moyenne des grains est avantageusement comprise entre 10 et 125 mm.

Les fines également appelées « fillers » ou « fines d'addition » est un produit sec, finement divisé, issu de la taille, du sciage ou du travail de roches naturelles, de granulats tels que précédemment définis et des pierres ornementales. Avantageusement, les fines présentent une dimension moyenne des grains notamment comprise entre 5 et 200 µm.

Le sable, le granulat et/ou les fines sont ajouté(es) pour mieux réguler la hausse de température lors de l'étape (c) du procédé mais également pour optimiser les propriétés physiques et mécaniques du géopolymère obtenu.

Le sable éventuellement ajouté lors de l'étape (b) peut être un sable calcaire ou un sable siliceux. Avantageusement, il s'agit d'un sable siliceux qui permet d'atteindre les meilleurs résultats en ce qui concerne l'optimisation des propriétés physiques et mécaniques du géopolymère obtenu. Par « sable siliceux », on entend, dans le cadre de la présente invention, un sable constitué à plus de 90%, notamment à plus de 95%, en particulier à plus de 98% et, plus particulièrement, à plus de 99% de silice (SiO₂). Le sable siliceux mis en oeuvre dans la présente invention présente avantageusement une dimension moyenne des grains notamment inférieure à 10 mm, notamment inférieure à 7 mm et, en particulier, inférieure à 4 mm. A titre d'exemple particulier, on peut utiliser un sable siliceux présentant une dimension moyenne des grains comprise entre 0,2 et 2 mm.

Lorsque du sable est ajouté en plus de la source alumino-silicatée à la solution d'activation, le rapport massique entre sable et source alumino-silicatée est compris 2/1 et 1/2, notamment entre 1,5/1 et 1/1,5 et, en particulier, entre 1,2/1 et 1/1,2.

L'étape (c) du procédé selon l'invention consiste à soumettre le mélange obtenu à l'étape (b) à des conditions permettant le durcissement du mélange géopolymérique.

Toute technique connue de l'homme du métier pour faire durcir un mélange géopolymérique obtenu à partir d'une solution fortement saline telle que précédemment définie est utilisable lors de l'étape de durcissement du procédé.

Les conditions permettant le durcissement lors de l'étape (c) comprennent avantageusement une étape de cure éventuellement suivie d'une étape de séchage. L'étape de cure peut se faire à l'air libre, sous eau, dans des moules hermétiques divers, par humidification de l'atmosphère entourant le mélange géopolymérique ou par application d'un enduit imperméable sur ledit mélange. Cette étape de cure peut être mise en oeuvre sous une température comprise entre 10 et 80°C, notamment entre 15 et 60°C et, en particulier, entre 20 et 40°C et peut durer entre 1 et 40 jours, voire plus longtemps. Il est évident que la durée de la cure dépend des conditions mises en oeuvre lors de cette dernière et l'homme du métier saura déterminer la durée la plus adaptée, une fois les conditions définies et éventuellement par des tests de routine.

Lorsque l'étape de durcissement comprend une étape de séchage, en plus de l'étape de cure, ce séchage peut se faire à une température comprise entre 30 et 90°C, notamment entre 40 et 80°C et, en particulier, entre 50 et 70°C et peut durer entre 6 h et 10 jours, notamment entre 12 h et 5 jours et, en particulier, entre 24 et 60 h.

De plus, préalablement au durcissement du mélange géopolymèrique obtenu à partir d'une solution fortement saline, ce dernier peut être placé dans des moules de façon à lui conférer une forme prédéterminée suite à ce durcissement.

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

La Figure 1 présente les résultats des essais aux prisomètres Vicat sur un géopolymère selon la présente invention (concentrat et 8,8 mol/L en hydroxyle et Na₂O/Al₂O₃ = 1,5).
La Figure 2 présente les résistances mécaniques en flexion et en compression d'un géopolymère selon la présente invention sous différents modes de conservation.

### EXPOSÉ DÉTAILLÉ DE MODES DE RÉALISATION PARTICULIERS

### I. Matériaux utilisés et choix de formulation.

Dans l'ensemble des exemples suivants, la source alumino-silicatée utilisée est du métakaolin. Le métakaolin employé est du Pieri Premix MK (Grace Construction Products), dont la composition déterminée par fluorescence X est reportée dans le Tableau 1. La surface spécifique de ce matériau, mesurée par la méthode Brunauer-Emmet-Teller, est égale à 19,9 m²/g et le diamètre moyen des particules (d₅₀), déterminé par granulométrie laser, est égal à 5,9 µm.

**Tableau 1 : Composition chimique du métakaolin employé.**

| **% massique** | **SiO₂** | **Al₂O₃** | **CaO₃** | **Fe₂O₃** | **TiO₂** | **K₂O** | **Na₂O** | **MgO** | **P₂O₅** |
|---|---|---|---|---|---|---|---|---|---|
| **Métakaolin** | 54,40 | 38,40 | 0,10 | 1,27 | 1,60 | 0.62 | < 0,20 | < 0,20 | / |

Dans l'ensemble des exemples suivants, les cations compensateurs et agents de minéralisation retenus sont des hydroxydes d'alcalins, introduits sous forme de granules de NaOH et de KOH (Prolabo, Rectapur, 98%).

La silice éventuellement ajoutée au système est une silice amorphe (Degussa) dont le diamètre moyen est égal à 3,5 ± 0,3 µm.

### II. Matériaux utilisés et choix de formulation.

Le mélange des constituants s'est déroulé en deux étapes.

Au cours de la première étape, les simulants de déchets (concentrats ou boues) ont été préparés par dissolution ou mise en suspension des produits dans de l'eau ultrapure. Les hydroxydes d'alcalins ont été rajoutés par dissolution des produits appropriés dans ces simulants. La silice amorphe éventuellement ajoutée au système est ensuite introduite dans ces solutions et mélangée pendant 30 min.

Au cours de la seconde étape, le géopolymère est préparé par mélange du métakaolin et de la solution d'activation dans un malaxeur normalisé de laboratoire (Norme Européenne EN 196-1) durant 1 min à vitesse lente (correspondant à 140 tr/min) et 2 min à vitesse rapide (correspondant à 250 tr/min).

Le matériau est ensuite mis en place dans des moules en téflon de dimensions 4*4*16 cm, vibré durant quelques secondes, puis placé en conditions étanches à 20°C et à pression atmosphérique pendant 24 h.

Après cette période, le géopolymère est démoulé puis placé en sac étanche et conservé à pression et température ambiantes jusqu'à utilisation.

### III. Exemple d'incorporation d'un concentrat d'évaporation.

L'exemple est basé sur un concentrat d'évaporation issu d'eau de mer, concentrée 10 fois par évaporation. La salinité est alors de 350 g/L se répartissant en :
- 192,5 g de chlore,
- 107 g de sodium,
- 27 g de sulfates,
- 13 g de magnésium,
- 4,2 g de calcium et
- 3,9 g de potassium

De tels déchets conduisent à une rigidification prématurée d'une pâte cimentaire de type hydraulique, incompatible avec une mise en oeuvre industrielle. L'utilisation d'un liant géopolymère peut donc se révéler pertinent.

Afin de simplifier la réalisation des essais, les inventeurs ont considéré 1 L de concentrât. Deux essais ont été réalisés en parallèle.

A noter que le potassium du déchet devrait entrer en compte dans le rapport molaire M₂O/Al₂O₃. Cependant, compte-tenu de la quantité de matière équivalente (0,1 mol de potassium), face à la quantité de matière de sodium (4,6 mol) dans le déchet, et de la quantité de sodium apporté par la soude en plus, la présence de potassium dans les rapports molaires est négligée et le rapport M₂O/Al₂O₃ est considéré comme équivalent au rapport Na₂O/Al₂O₃.

Dans l'Essai 1, le rapport Na₂O/Al₂O₃ est maintenu égal à 1, avec Na provenant à la fois du NaOH ajouté et du NaCl du concentrât. Les autres rapports sont maintenus dans les gammes classiques de la littérature avec H₂O/Na₂O = 12 et SiO₂/Na₂O = 3,6. La concentration en hydroxyles est alors de **4,6 mol/L**.

Le géopolymère 1 (i.e. le géopolymère de l'Essai 1) est donc composé de :
- 184,8 g de NaOH,
- 334,3g de SiO₂,
- 1231,6 g de métakaolin,
- 1001,5 g d'eau et
- 272 g de NaCl

Ce qui conduit à l'obtention de 1,67 L de matériau.

Dans l'Essai 2, le rapport Na₂O/Al₂O₃ est égal à 1,5 avec Na provenant à la fois du NaOH ajouté et du NaCl du concentrât. Par conséquent, ce rapport se trouve en dehors des gammes classiques de la littérature **[16-18].** La concentration en hydroxyle dans la solution d'activation est égale à **9,2 mol/L**. Les autres rapports sont alors égaux à H₂O/Na₂O = 8 et SiO₂/Na₂O = 2,4.

Le géopolymère 2 (i.e. le géopolymère de l'Essai 2) est donc composé de :
- 370,9 g de NaOH,
- 334,3 g de SiO₂,
- 1231,6 g de métakaolin,
- 1001,5 g d'eau et
- 272 g de NaCl.

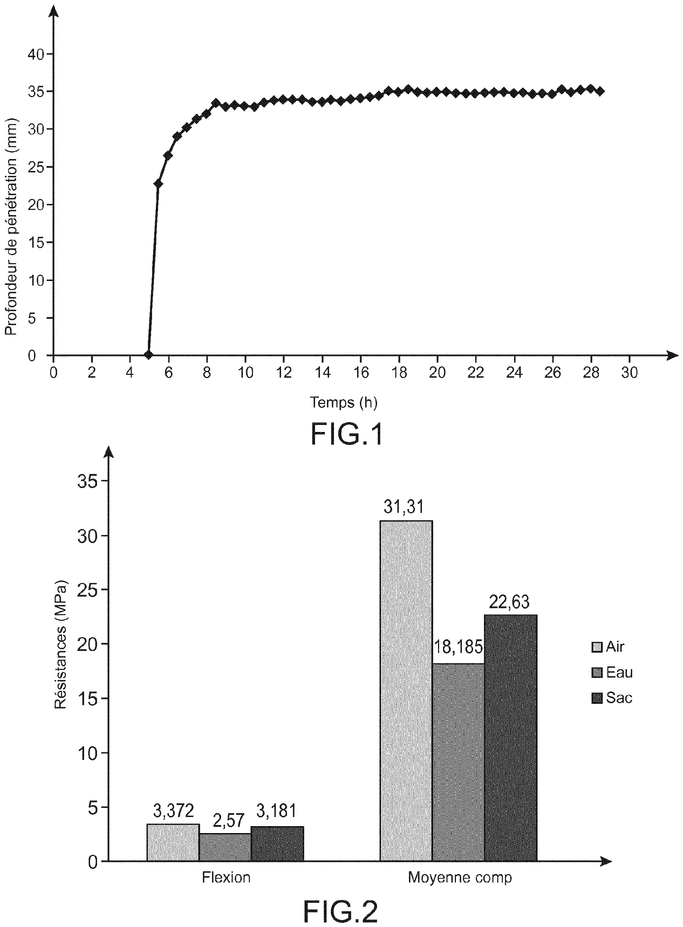

Alors que le géopolymère 1, fabriqué selon les recommandations de la littérature ne se consolide pas, le géopolymère 2 réalisé en respectant la concentration en agents minéralisants, se consolide. Pour ce dernier, les essais de prise Vicat associés (réalisés selon la norme EN 196-3) ont montré un début de prise aux environs de 5 h et une fin de prise aux environs de 8 h (Figure 1), ce qui est typiquement compatible avec une mise en oeuvre industrielle.

De plus, les résistances mécaniques en compression obtenues après 28 jours de cure sous différents modes de conservation (air, eau, sac) sont largement supérieures aux exigences de l'ANDRA pour les déchets homogènes (8 MPa en compression) (Figure 2).

### IV. Exemple d'incorporation d'ions iodure.

Une pâte de géopolymère a été préparée avec 5% (en masse) d'iodure de sodium (NaI).

Le protocole de préparation a consisté en une dissolution préalable de l'iodure de sodium dans la solution d'activation constitué de soude, d'eau et de silicate de sodium (Woellner).

Après dissolution complète, le métakaolin est ajouté à la solution d'activation et les éprouvettes 4*4*16 cm sont mises, après prise, pendant 7 jours dans différentes conditions de stockage (eau, air, sac).

Les compositions des pâtes de géopolymère (avec et sans NaI) et les propriétés mécaniques des géopolymères ainsi préparées sont reportées dans le Tableau 2.

**Tableau 2 : Composition et caractérisation des pâtes de géoplymère comprenant ou non du NaI.**

| | Composition liant (en g) | Propriétés mécaniques à 7 jours (MPa) en compression | Temps de prise (heures) |
|---|---|---|---|
| Pâte de géopolymere avec NaI | NaOH : 157 | Eau :44 | 12 |
| | H₂O:167 | Air:48 | |
| | Silicate de sodium (Betol 39T) : 1249 | Sac:46 | |
| | Metakaolin : 1096 | | |
| | Nal : 141 | | |
| Pâte de géopolymere sans NaI | NaOH : 157 | Eau :47 | 8 |
| | H₂O:167 | Air:55 | |
| | Silicate de sodium (Betol 39T) : 1249 | Sac:53 | |
| | Metakaolin : 1096 | | |
| | NaI : 0 | | |

Bien que la présence de NaI augmente le temps de prise, les résistances mécaniques en compression obtenues après 7 jours de cure sous différents modes de conservation (air, eau, sac) sont largement supérieures aux exigences de l'ANDRA pour les déchets homogènes (8 MPa en compression).

### RÉFÉRENCES BIBLIOGRAPHIQUES

1. Breck, 1974, "Zeolite Molecular Sieves : Stucture, Chemistry and Use". New York: Wiley Interscience, pages 415-418.
2. Xu et Van Deventer, 1999, "The Geopolymerisation of Natural Alumino-Silicates", in Geopolymère'99 Proceedings, pages 43-63.
3. Barbosa et al, 2000, "Synthesis and characterisation of materials based on inorganic polymers of alumina and silica: sodium polysialate polymers", International Journal of Inorganic Materials, vol. 2, pages 309-317.
4. Xu et Van Deventer, 2002, "Geopolymerisation of multiple minerais", Minerais Engineering, vol. 15, pages 1131-1139.
5. Davidovits, 1994, "Recent Progresses in Concretes for Nuclear Waste and Uranium Waste Containment", Concrete International, vol. 16, pages 53-58.
6. Palomo et al, "Chemical stability of cementitious materials based on metakaolin", Cement and Concrete Research, vol. 29, pages 997-1004.
7. Palomo et al, 1999, "Alkali-activated fly ashes: A cement for the future", Cement and Concrete Research, vol. 29, pages 1323-1329.
8. Lee et Van Deventer, 2002, "The effects of inorganic salt contamination on the strength and durability of geopolymers", Colloids and Surfaces A : Physicochemical and Engineering Aspects, vol. 211, pages 115-126.
9. Swanepoel et Strydom, 2002, "Utilisation of fly ash in a geopolymeric material", Applied Geochemistry, vol. 17, pages 1143-1148.
10. Hardjito et al, 2004, "Properties of Geopolymer Concrete with Fly Ash as Source Material : Effect of Mixture Composition", in 7th CANMET/ACI International Conference on Recent Advances in Concrete Technology, (26-29 mai 2004), Las Vegas, USA.
11. Bankowski et al, 2004, "Using inorganic polymer to reduce leach rates of metals from brown coal fly ash", Minerais Engineering, vol. 17, pages 159-166.
12. Bakharev, 2005, "Geopolymeric Materials prepared using Class F fly as hand elevated temperature curing", Cement and Concrete Research, vol. 35, pages 1224-1232.
13. Xu et Van Deventer, 2000, "The geopolymerisation of alumino-silicate minerais", International Journal of Mineral Processing, vol. 59, pages 247-266.
14. Barbosa et al, 1999, "Synthesis and Characterization of Sodium Polysialate Inorganic Polymer Based on Alumina and Silica", in Geopolymère'99 Proceedings, pages 65-77.
15. Davidovits, 1999, "Chemistry of Geopolymeric Systems Terminology", in Geopolymère'99 Proceedings, pages 9-39.
16. Barbosa et al, 2000, "Synthesis and characterisation of materials based on inorganic polymers of alumina and silica: sodium polysialate polymers", International Journal of Inorganic Materials, vol. 2, pages 309-317.
17. Singh et al, 2005, "Geopolymer formation processes at room temperature studied by 29Si and 27Al MAS NMR", Materials Science and Engineering A, vol. 396, pages 392-402.
18. Davidovits, 1994, "Recent Progresses in Concretes for Nuclear Waste and Uranium Waste Containment", Concrete International, vol. 16, pages 53-58.
19. Demande internationale WO 03/78349 au nom de Universität für Chemie und Technologie, Prag, publiée le 25 septembre 2003.
20. Demande de brevet CZ 20003781 au nom de VS Chemicka Technologicka, publiée le 12 juin 2002.
21. Demande de brevet JP 8301639 au nom de Ikeda *et al*, publiée le 19 novembre 1996.
22. Demande de brevet JP 8301638 au nom de Ikeda *et al*, publiée le 19 novembre 1996.
23. Demande de brevet US 2005/0160946 au nom de Comrie, publiée le 28 juillet 2005.
24. Demande internationale WO 95/13995 au nom de Davidovits, publiée le 26 mai 1995.
25. Demande de brevet EP 0 614 858 au nom de The Hera Corporation, publiée le 14 septembre 1994.
26. Demande internationale WO 2005/049522 au nom de ROCLA PTY Ltd, publiée le 2 juin 2005.
27. Demande de brevet FR 2 831 905 au nom de Davidovits et Waendendries, publiée le 9 mai 2003.
28. Demande de brevet CN 1 762 884 au nom de Yan et al, publiée le 26 avril 2006.
29. Demande internationale WO 2004/026698 au nom de Rescon LLC, publiée le 1^{er} avril 2004.
30. Demande de brevet DE 10 220 310, au nom de Institut für Fertigteiltechnik und Fertigbau, publiée le 21 août 2003.
31. Demande internationale WO 2005/019130, au nom de Industrial Research Limited, publiée le 3 mars 2005.
32. Demande internationale WO 03/87008, au nom de Cordi-Géopolymère, publiée le 23 octobre 2003.
33. Demande de brevet DE 4 410 437, au nom de Vahlbrauk, publiée le 16 mars 1995.
34. Demande de brevet DE 1 953 590, au nom de Vahlbrauk, publiée le 2 mai 1996.
35. Demande internationale WO 2006/097696, au nom de British Nuclear Fuels, publiée le 21 septembre 2006.
36. Brevet US 5,539,140, au nom de Davidovits, publiée le 23 juillet 1996.
37. Brevet US 4,859,367, au nom de Davidovits, publiée le 22 août 1989.
38. Van Jaarsveld et Van Deventer, 1999, "The potential use of geopolymeric materials to immobilise toxic metals : Part.II. Material and Leaching Characteristics", Minerais Engineering, vol. 12, pages 75-91.
39. Van Jaarsveld et Van Deventer, 1996, "The potential use of geopolymeric materials to immobilise toxic metals : Part I. Theory and applications", Minerais Engineering, vol. 10, pages 659-669.
40. Xu et al, 2006, "Study on the factors of affecting the immobilization of heavy metals in fly ash-based geopolymers", Materials Letters, vol. 60, pages 820-822.
41. Palomo et Palacios, 2003, "Alkali-activated cementitious materials: Alternative matrices for the immobilisation of hazardous wastes: Part II. Stabilisation of chromium and lead", Cement and Concrete Research, vol. 33, pages 289-295.
42. Fernandez Jiminez et al, 2004, "Microstructural characterisation of alkali-activated PFA matrices for waste immobilisation", Cement and Concrete Composites, vol. 26, pages 1001-1006.

## Revendications

1. Procédé pour traiter et/ou inerter une solution, éventuellement contaminée, présentant une concentration en ions halogénures ou en ions phosphates supérieure ou égale à 250 mM,
ledit procédé comprenant une étape de dissolution/polycondensation d'une source alumino-silicatée dans une solution d'activation qui est une solution aqueuse dont le pH est supérieur à 9, préparée à partir de ladite solution, éventuellement contaminée, présentant une concentration en ions halogénures ou en ions phosphates supérieure ou égale à 250 mM,
moyennant quoi est obtenu un géopolymère dans la matrice minérale duquel sont inclus les éléments initialement contenus dans ladite solution, éventuellement contaminée, présentant une concentration en ions halogénures ou en ions phosphates supérieure ou égale à 250 mM.

2. Procédé selon la revendication 1, **caractérisé en ce que** ladite solution, éventuellement contaminée, présentant une concentration en ions halogénures ou en ions phosphates supérieure ou égale à 250 mM comprend au moins des ions choisis entre les ions fluorure (F⁻), les ions bromure (Br⁻), les ions chlorure (Cl⁻), les ions iodure (I⁻) et les ions phosphate (PO₄³⁻) en une concentration supérieure ou égale à 500 mM, en particulier supérieure ou égale à 1 M et, plus particulièrement, en une concentration comprise entre 2 et 15 M ou encore entre 5 et 10 M.

3. Procédé selon la revendication 1 ou 2, **caractérisé en ce que** ladite solution présentant une concentration en ions halogénures ou en ions phosphates supérieure ou égale à 250 mM comprend au moins un élément choisi parmi le tritium (³H), le carbone (¹⁴C), le chlore (³⁶Cl), le fluor (¹⁸F), l'iode (¹³¹I), le potassium (⁴⁰K), le calcium (⁴⁵Ca), le cobalt (⁶⁰Co), le nickel (⁶³Ni), le soufre, le zinc, le phosphore, le mercure, le plomb, le cadmium, le krypton (⁸⁵Kr), l'arsenic, le strontium (⁹⁰Sr), le ruthénium, le césium, des émetteurs α, tels que l'américium, le plutonium et l'uranium et leurs mélanges.

4. Procédé selon l'une quelconque des revendications 1 à 3, **caractérisé en ce que** ladite solution, éventuellement contaminée, présentant une concentration en ions halogénures ou en ions phosphates supérieure ou égale à 250 mM se présente sous forme d'une solution aqueuse, d'une suspension dans de l'eau ou d'une suspension colloïdale dans de l'eau.

5. Procédé selon l'une quelconque des revendications 1 à 4, **caractérisé en ce que** ladite solution, éventuellement contaminée, présentant une concentration en ions halogénures ou en ions phosphates supérieure ou égale à 250 mM est choisie dans le groupe constitué par de l'eau saumâtre, de l'eau de source, de l'eau potable, de l'eau de mer, un effluent industriel, une solution issue de l'agroalimentaire, une solution issue d'une installation nucléaire et une solution issue de l'industrie chimique fine ou de l'industrie pharmaceutique.

6. Procédé selon l'une quelconque des revendications précédentes, **caractérisé en ce qu'**il comprend les étapes suivantes :
a) préparer une solution d'activation qui est une solution aqueuse dont le pH est supérieur à 9, à partir de la solution, éventuellement contaminée, présentant une concentration en ions halogénures ou en ions phosphates supérieure ou égale à 250 mM,
b) ajouter à la solution obtenue à l'étape (a) au moins une source alumino-silicatée,
c) soumettre le mélange obtenu à l'étape (b) à des conditions permettant le durcissement du géopolymère.

7. Procédé selon la revendication 6, **caractérisé en ce que** ladite étape (a) consiste à ajouter, à la solution, éventuellement contaminée, présentant une concentration en ions halogénures ou en ions phosphates supérieure ou égale à 250 mM, au moins un élément choisi parmi du silicate de sodium (Na₂SiO₃), du silicate de potassium (K₂SiO₂), de l'hydroxyde de sodium (NaOH), de l'hydroxyde de potassium (KOH), de l'hydroxyde de calcium (Ca(OH)₂), de l'hydroxyde de césium (CsOH), une solution aqueuse de silicate de sodium (Na₂SiO₃), une solution aqueuse de silicate de potassium (K₂SiO₂), une solution aqueuse d'hydroxyde de sodium (NaOH), une solution aqueuse d'hydroxyde de potassium (KOH), une solution aqueuse d'hydroxyde de calcium (Ca(OH)₂), une solution aqueuse d'hydroxyde de césium (CsOH), de la silice, de la silice amorphe, de la silice colloïdale et de la silice vitreuse.

8. Procédé selon la revendication 6 ou 7, **caractérisé en ce que** ladite étape (b) consiste à mettre en contact la solution d'activation obtenue suite à l'étape (a) et la source alumino-silicatée choisie parmi les minéraux d'alumino-silicates naturels; des minéraux d'alumino-silicates naturels calcinés ; des verres synthétiques à base d'alumino-silicates purs; du ciment alumineux; de la ponce; des sous-produits calcinés ou résidus d'exploitation industrielle ; et des mélanges de ceux-ci.

9. Procédé selon l'une quelconque des revendications 6 à 8, **caractérisé en ce que**, lors de ladite étape (b), outre ladite source alumino-silicatée, du sable, un granulat et/ou des fines peu(ven)t être ajouté(es) à la solution d'activation obtenue suite à ladite étape (a).

10. Procédé selon l'une quelconque des revendications 6 à 9, **caractérisé en ce que**, lors de ladite étape (c), lesdites conditions permettant le durcissement comprennent une étape de cure éventuellement suivie d'une étape de séchage.

## Patentansprüche

1. Verfahren zum Behandeln und/oder Inertisieren einer möglicherweise kontaminierten Lösung mit einer Konzentration an Halogenidionen oder Phosphationen größer oder gleich 250 mM,
wobei das Verfahren einen Schritt der Auflösung/Polykondensation einer Aluminosilikat-Quelle in einer Aktivierungslösung umfasst, die eine wässrige Lösung ist, deren pH-Wert höher als 9 ist und die aus der möglicherweise kontaminierten Lösung mit einer Konzentration an Halogenidionen oder Phosphationen größer oder gleich 250 mM hergestellt ist,
wodurch ein Geopolymer erhalten wird, in dessen mineralischer Matrix Elemente eingeschlossen sind, die ursprünglich in der möglicherweise kontaminierten Lösung mit einer Konzentration an Halogenidionen oder Phosphationen größer oder gleich 250 mM enthalten waren.

2. Verfahren nach Anspruch 1, **dadurch gekennzeichnet, dass** die möglicherweise kontaminierte Lösung mit einer Konzentration an Halogenidionen oder Phosphationen größer oder gleich 250 mM zumindest Ionen, ausgewählt aus Fluoridionen (F⁻), Bromidionen (Br⁻), Chloridionen (Cl⁻), lodidionen (I⁻) und Phosphationen (PO₄³⁻) mit einer Konzentration größer oder gleich 500 mM, insbesondere größer oder gleich 1 M und insbesondere mit einer Konzentration zwischen 2 und 15 M oder zwischen 5 und 10 M, enthält.

3. Verfahren nach Anspruch 1 oder 2, **dadurch gekennzeichnet, dass** die Lösung mit einer Konzentration an Halogenidionen oder Phosphationen größer oder gleich 250 mM zumindest ein Element, ausgewählt aus Tritium (³H), Kohlenstoff (¹⁴C), Chlor (³⁶Cl), Fluor (¹⁸F), Iod (¹³¹I), Kalium (⁴⁰K), Calcium (⁴⁵Ca), Kobalt (⁶⁰Co), Nickel (⁶³Ni), Schwefel, Zink, Phosphor, Merkur, Blei, Cadmium, Krypton (⁸⁵Kr), Arsen, Strontium (⁹⁰Sr), Ruthenium, Cäsium, α-Emittern, wie etwa Americium, Plutonium und Uran und deren Gemische, enthält.

4. Verfahren nach einem der Ansprüche 1 bis 3, **dadurch gekennzeichnet, dass** die möglicherweise kontaminierte Lösung mit einer Konzentration an Halogenidionen oder Phosphationen größer oder gleich 250 mM in Form einer wässrigen Lösung, einer Suspension in Wasser oder einer kolloidalen Suspension in Wasser vorliegt.

5. Verfahren nach einem der Ansprüche 1 bis 4, **dadurch gekennzeichnet, dass** die möglicherweise kontaminierte Lösung mit einer Konzentration an Halogenidionen oder Phosphationen größer oder gleich 250 mM ausgewählt ist aus einer Gruppe umfassend Brackwasser, Quellwasser, Trinkwasser, Meerwasser, Industrieabwasser, eine Lösung aus der Lebensmittelindustrie, eine Lösung aus einer Kernkraftanlage und eine Lösung aus der Feinchemie- oder Pharmaindustrie.

6. Verfahren nach einem der vorangehenden Ansprüche, **dadurch gekennzeichnet, dass** es die nachstehenden Schritte umfasst:
a) Herstellen einer Aktivierungslösung, die eine wässrige Lösung ist, deren pH-Wert höher als 9 ist, ausgehend von der möglicherweise kontaminierten Lösung mit einer Konzentration an Halogenidionen oder Phosphationen größer oder gleich 250 mM,
b) Zugeben von zumindest einer Aluminosilikat-Quelle zur in Schritt (a) erhaltenen Lösung,
c) Unterwerfen des in Schritt (b) erhaltenen Gemischs unter Bedingungen, die das Härten des Geopolymers gestatten.

7. Verfahren nach Anspruch 6, **dadurch gekennzeichnet, dass** der Schritt (a) darin besteht, der möglicherweise kontaminierten Lösung mit einer Konzentration an Halogenidionen oder Phosphationen größer oder gleich 250 mM ein Element, ausgewählt aus Natriumsilikat (Na₂SiO₃), Kaliumsilikat (K₂SiO₂), Natriumhydroxid (NaOH), Kaliumhydroxid (KOH), Calciumhydroxid (Ca(OH)₂), Cäsiumhydroxid (CsOH), einer wässrigen Lösung aus Natriumsilikat (Na₂SiO₃), einer wässrigen Lösung aus Kaliumsilikat (K₂SiO₂), einer wässrigen Lösung aus Natriumhydroxid (NaOH), einer wässrigen Lösung aus Kaliumhydroxid (KOH), einer wässrigen Lösung aus Calciumhydroxid (Ca(OH)₂), einer wässrigen Lösung aus Cäsiumhydroxid (CsOH), Siliciumoxid, amorphem Siliciumoxid, kolloidalem Siliciumoxid, und Quarzglas, hinzuzugeben.

8. Verfahren nach Anspruch 6 oder 7, **dadurch gekennzeichnet, dass** der Schritt (b) darin besteht, die aus Schritt (a) erhaltene Aktivierungslösung und die Aluminosilikat-Quelle, ausgewählt aus natürlichen Aluminosilikat-Mineralien; kalzinierten natürlichen Aluminosilikat-Mineralien; synthetischen Gläsern auf der Basis von reinen Alumosilikaten; Tonerdezement; Bims; kalzinierten Nebenprodukten oder industriellen Rückständen; und deren Gemischen, in Kontakt zu bringen.

9. Verfahren nach einem der Ansprüche 6 bis 8, **dadurch gekennzeichnet, dass** in Schritt (b) neben der Aluminosilikat-Quelle Sand, ein Granulat und/oder Feinstoffe zur in Schritt (a) erhaltenen Aktivierungslösung hinzugegeben werden.

10. Verfahren nach einem der Ansprüche 6 bis 9, **dadurch gekennzeichnet, dass** in Schritt (c) die Bedingungen, die das Härten gestatten, einen Schritt der Nachbehandlung, gegebenenfalls gefolgt von einem Schritt der Trocknung, umfassen.

## Claims

1. A method for treating and/or inerting a possibly contaminated solution having a halide ion or phosphate ion concentration of 250 mM or higher,
said method comprising a dissolution/polycondensation step of an aluminosilicate source in an activating solution that is an aqueous solution the pH of which is higher than 9, prepared from said possibly contaminated solution having a halide ion or phosphate ion concentration of 250 mM or higher,
after which a geopolymer is obtained having a mineral matrix containing the elements initially contained in said possibly contaminated solution having a halide ion or phosphate ion concentration of 250 mM or higher.

2. The method according to claim 1, **characterized in that** said possibly contaminated solution having a halide ion or phosphate ion concentration of 250 mM or higher comprises at least ions selected from among fluoride ions (F⁻), bromide ions (Br⁻), chloride ions (Cl⁻), iodide ions (I⁻) and phosphate ions (PO₄³⁻) in a concentration of 500 mM or higher, in particular 1 M or higher and more particularly in a concentration of between 2 and 15 M or between 5 and 10 M.

3. The method according to claim 1 or 2, **characterized in that** said solution having a halide ion or phosphate ion concentration of 250 mM or higher comprises at least one element selected from among tritium (³H), carbon (¹⁴C), chlorine (³⁶Cl), fluorine (¹⁸F), iodine (¹³¹I), potassium (⁴⁰K), calcium (⁴⁵Ca), cobalt (⁶⁰Co), nickel (⁶³Ni), sulphur, zinc, phosphorus, mercury, lead, cadmium, krypton (⁸⁵Kr), arsenic, strontium (⁹⁰Sr), ruthenium, caesium, α emitters such as americium, plutonium and uranium, and the mixtures thereof.

4. The method according to any of claims 1 to 3, **characterized in that** said possibly contaminated solution having a halide ion or phosphate ion concentration of 250 mM or higher is in the form of an aqueous solution, a suspension in water or a colloidal suspension in water.

5. The method according to any of claims 1 to 4, **characterized in that** said possibly contaminated solution having a halide ion or phosphate ion concentration of 250 mM or higher is selected from the group consisting of brackish water, spring water, potable water, sea water, industrial effluent, a solution derived from the agrifood sector, a solution derived from a nuclear plant and a solution derived from the fine chemical industry or pharmaceutical industry.

6. The method according to any of the preceding claims **characterized in that** it comprises the following steps:
a) preparing an activating solution that is an aqueous solution the pH of which is higher than 9, from the possibly contaminated solution having a halide ion or phosphate ion concentration of 250 mM or higher,
b) adding to the solution obtained at step (a) at least one aluminosilicate source,
c) subjecting the mixture obtained at step (b) to conditions allowing hardening of the geopolymer.

7. The method according to claim 6, **characterized in that** said step (a) consists of adding to the possibly contaminated solution having a halide ion or phosphate ion concentration of 250 mM or higher at least one element selected from among sodium silicate (Na₂SiO₃), potassium silicate (K₂SiO₂), sodium hydroxide (NaOH), potassium hydroxide (KOH), calcium hydroxide (Ca(OH)₂), caesium hydroxide (CsOH), an aqueous solution of sodium silicate (Na₂SiO₃), an aqueous solution of potassium silicate (K₂SiO₂), an aqueous solution of sodium hydroxide (NaOH), an aqueous solution of potassium hydroxide (KOH), an aqueous solution of calcium hydroxide (Ca(OH)₂), an aqueous solution of caesium hydroxide (CsOH), silica, amorphous silica, colloidal silica and vitreous silica.

8. The method according to claim 6 or 7, **characterized in that** said step (b) consists of contacting the activating solution obtained after step (a) with the aluminosilicate source selected from among natural aluminosilicate minerals; calcined natural aluminosilicate minerals; synthetic glass containing pure aluminosilicates; aluminous cement; pumice; calcined by-products or industrial operation residues; and mixtures thereof.

9. The method according to any of claims 6 to 8 **characterized in that** at step (b), in addition to said aluminosilicate source, the addition can be made of sand, granulate and/or fines to the activating solution obtained after said step (a).

10. The method according to any of claims 6 to 9, **characterized in that** at said step (c) said conditions allowing hardening comprise a curing step optionally followed by a drying step.
